# EUROPEAN PATENT SPECIFICATION

(11) **EP 2 286 619 B1**
(45) Date of publication and mention of the grant of the patent: **16.10.2013**
(21) Application number: 09746706.2
(22) Date of filing: 14.05.2009
(51) Int. Cl.: H04W 48/18, H04W 88/06

(54) **METHOD FOR CONTROLLING THE NETWORK SELECTION BY THE HOME NETWORK OPERATOR OF DUAL MODE USER EQUIPMENT HAVING BOTH MOBILE NETWORK AND FIXED-WIRELESS NETWORK ACCESS CAPABILITIES**
VERFAHREN ZUR STEUERUNG DER NETZWERKAUSWAHL VON DUAL MODE BENUTZERGERÄTEN, WELCHE SOWOHL MOBILNETZ- ALS AUCH FIXED-WIRELESS-NETZZUGANGSFÄHIGKEITEN BESITZEN, DURCH DEN HEIMNETZWERKBETREIBER
PROCÉDÉ DE COMMANDE DE LA SÉLECTION DE RÉSEAU PAR L'OPÉRATEUR DE RATTACHEMENT D'UN ÉQUIPEMENT UTILISATEUR DOUBLE& xA;& xA;PROCÉDÉ DE COMMANDE DE LA SÉLECTION DE RÉSEAU PAR L'OPÉRATEUR DU RÉSEAU LOCAL DE L'ÉQUIPEMENT UTILISATEUR EN DOUBLE-MODE AYANT DES CAPACITÉS D'ACCÈS AUX RÉSEAU MOBILE ET FIXE SANS FIL

(30) Priority: 14.05.2008 EP 08156178
(43) Date of publication of application: 23.02.2011
(73) Proprietor: NEC Corporation, Minato-ku Tokyo 108-8001 (JP)
(72) Inventor: FOK, Ah Chuen Frederic, Tokyo 108-8001 (JP); ROGER, Vincent, Tokyo 108-8001 (JP)
(74) Representative: Ilgart, Jean-Christophe
(86) International application number: PCT/JP2009/059296
(87) International publication number: WO 2009/139500

(56) References cited:
- JP-A- 2007 036 537
- JP-A- 2008 042 913
- JP-T- 2006 519 513
- US-A- 5 999 811
- US-A1- 2006 040 661
- US-A1- 2006 282 554
- "Universal Mobile Telecommunications System (UMTS); Characteristics of the Universal Subscriber Identity Module (USIM) application (3GPP TS 31.102 version 7.12.0 Release 7); ETSI TS 131 102", ETSI STANDARDS, LIS, SOPHIA ANTIPOLIS CEDEX, FRANCE, vol. 3-T3, no. V7.12.0, 1 April 2008 (2008-04-01), XP014041786, ISSN: 0000-0001
- "Universal Mobile Telecommunications System (UMTS); 3GPP system to Wireless Local Area Network (WLAN) interworking; WLAN User Equipment (WLAN UE) to network protocols; Stage 3 (3GPP TS 24.234 version 7.5.0 Release 7); ETSI TS 124 234", ETSI STANDARDS, LIS, SOPHIA ANTIPOLIS CEDEX, FRANCE, vol. 3-CN1;3-CT1, no. V7.5.0, 1 March 2007 (2007-03-01), XP014037810, ISSN: 0000-0001

## Description

### TECHNICAL DOMAIN

The invention pertains to telecommunication field and concerns a method for controlling the network selection by the home operator of a dual mobile/fixed-wireless user equipment UE having mobile network access capability and fixed-wireless network access capability.

The invention concerns also a dual mobile/fixed-wireless User Equipment UE and a system adapted for implementing said method.

### STATE OF PRIOR ART

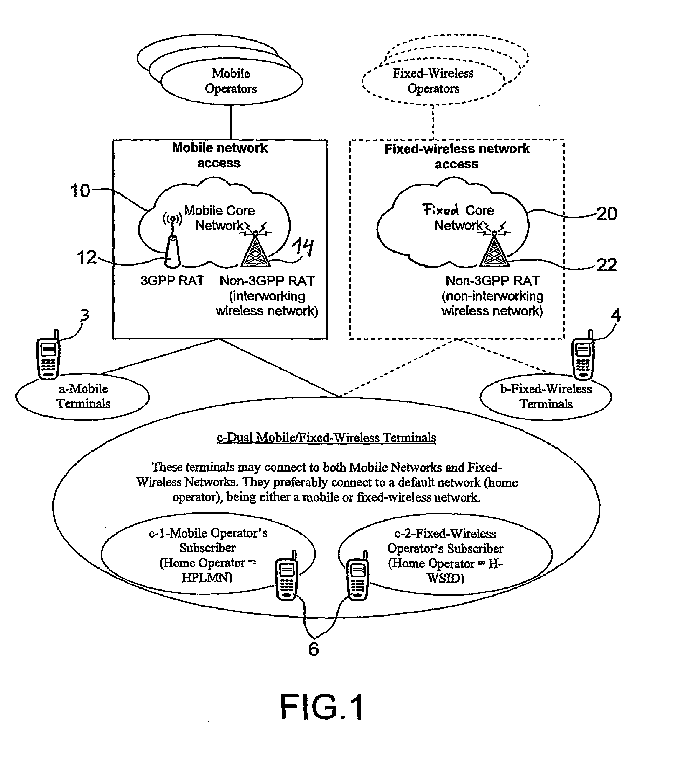

Users Equipments are of tree types schematically illustrated by figure 1:
a- mobile UEs 3 with eventually dual 3GPP-WLAN capabilities,
b- Fixed-wireless UEs 4 with only fixed-wireless network access capability, and
c- Dual mobile/fixed-wireless UEs 6 having mobile network access capability and fixed-wireless network access capability.

The mobile UEs 3 of the first type are designed for mobile operator subscribers and only have mobile network access capability to connect to a mobile Core Network 10 through base station 12 implementing 3GPP RAT (Radio Access Technology, or through an access point 14 implementing a Non-3GPP RAT.

For this type of mobile UEs 3, the selection of a network is defined by 3GPP:
- in "3GPP CT1 TS 23.122-v.7a0: Non-Access-Stratum (NAS) functions related to Mobile Station (MS) in idle mode" and "3GPP SA1 TS 22.278-v.830: Service requirements for the Evolved Packet System (EPS)" when the PLMN (for Public Land Mobile Network) is accessed via 2G/3G/LTE access, or,
- in "3GPP CT1 TS 23.234-v.750: 3GPP system to Wireless Local Area Network (WLAN) interworking; System description" and "3GPP SA1 TS 22.278-v.830: Service requirements for the Evolved Packet System (EPS)" when the PLMN is accessed via non-3GPP access.

In the second case, there is an interworking infrastructure (pre-SAE I-WLAN or SAE Interworking) between the WLAN access network and the mobile operator Core Network.

As defined by the above selection procedure, the UEs 3 preferably selects the Home Mobile Operator (HPLMN) as the highest priority PLMN at initial network selection or when they leave the area covered by the home operator (HPLMN) for Home Public Land Mobile Network), and if the HPLMN (for Home Public Land Mobile Network) is not available, the UEs 3 preferably selects a roaming partner, using operator or user controlled preferred PLMN lists stored on (U) SIM. Additionally to the PLMN selection, the UEs 3 selects the Radio Access technology providing access to the PLMN, which can be 3GPP Radio Access Technology ((GSM/UMTS/LTE)) or non-3GPP Radio Access Technology (3GPP2, WLAN: WiFi, WiMax...).

The Fixed-Wireless UEs 4 of the second type have wireless radio capabilities (e.g. WiFi) and connect to a fixed Core network 20 through a wireless access point 22 implementing a Non-3GPP RAT, e.g. Home network, WiFi Hot Spot, Company network... Examples of such devices are laptops with WiFi Cards, Wireless Phones at home.

Such UEs only have fixed-wireless networks access capability, i.e. they always select fixed-wireless networks at initial network selection.

The dual mobile/Fixed-wireless devices 6 of the third type have both mobile network access and fixed-wireless network access capability, i.e. they may connect to the mobile Core network 10 and to the fixed Core network 20, with eventually a simultaneous connection to the mobile network and to the fixed-wireless network. The HPLMN as well as the roaming partners may be a PLMN or a fixed wireless network. There can be no interworking infrastructure between mobile and fixed-wireless networks at the Access or Core Network level.

Such dual mobile/fixed-wireless UEs appear in new use cases investigated by 3GPP Release 8 studies (3GPP SA1 TR 22.812-v.100: Study into Network Selection Requirements for non-3GPP Access, and 3GPP SA1 TR 22.937v.100: Requirements for service continuity between mobile and WLAN networks) and TISPAN Re 12 study ETSI TR 181 011 / DTR/TISPAN-01038-NGN-R2: Fixed-Mobile Convergence; Requirements Analysis (Release 2)

Two categories of UEs 6 can be identified:
c1: dual mobile/fixed-wireless UEs for mobile operator's subscriber. In this case, the home operator owns a mobile network, i.e. the Home PLMN (HPLMN) as currently defined in 3GPP. The HPLMN has commercial agreements with other mobile networks and other fixed-wireless networks.
c2: dual mobile/fixed-wireless UEs for fixed-wireless operator's subscriber. In this case, the home operator owns a fixed network that can be accessed by fixed Access-Points (H-WSID(s)). The fixed-wireless home operator has commercial agreements with other mobile networks and other fixed-wireless networks.

As defined by 3GPP requirements in 3GPP SA1 TR 22.812-v.100: Study into Network Selection Requirements for non-3GPP Access, such UEs will initiate a PLMN selection when the mobile network access mechanism is used, and a similar but separate fixed-wireless network selection when the fixed-wireless network access is used.

Currently, 3GPP has not yet defined detailed network selection mechanisms.

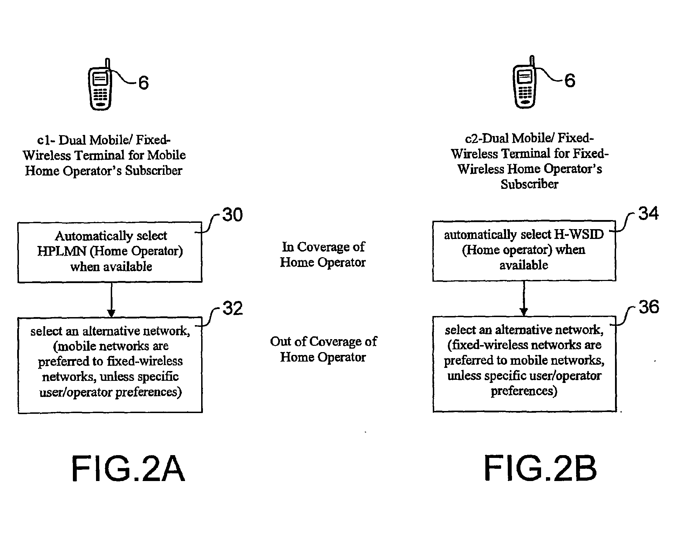

Figures 2A and 2B schematically illustrate a foreseen network selection behaviour for the dual mode UEs 6.

In this 3GPP proposal, it is expected that these dual mode UEs will have a different network selection behavior depending on whether the home operator is a mobile network or a fixed-wireless network.

As shown by figure 2A, dual mobile/fixed-wireless UEs 6 for mobile operator subscriber are expected to automatically select the Home Mobile network (HPLMN) step 30 as the default network at initial network selection. They additionally may also roam to V-PLMNs or fixed-wireless partners. And when the default network (HPLMN) is unavailable, these UEs will continue the PLMN selection procedure, thereby preferably selecting mobile networks at step 32 rather than fixed-wireless networks.

As shown by figure 2B, at step 34, dual mobile/fixed-wireless UEs for fixed-wireless operator subscriber are expected to automatically select the Home operator fixed-wireless network (identified by H-WSID access point) as the default network at initial network selection. They additionally may also roam to fixed-wireless partners or mobile (PLMN) partners. When the default network (H-WSID) is unavailable, these UEs are expected to preferably select, at step 36, an alternative fixed-wireless network if available rather than a PLMN.

Currently 3GPP has not specified any method for such devices with both mobile and fixed-wireless networks access capabilities to perform network selection between mobile operators and fixed-wireless operators.

Currently 3GPP has not specified any method to allow mobile phone manufacturers to design a generic dual mobile/fixed-wireless terminal able to adapt to both mobile operator requirements and fixed-wireless operator requirements.

An object of the invention is to overcome the above described drawbacks.

### PRESENTATION OF THE INVENTION

The object of the invention is achieved by a new network selection method for UEs with both mobile networks and fixed-wireless networks access capabilities, using configuration parameters under the control of the home operator used for configuring the network selection behavior of said UE according to the home operator class HOC, i.e. mobile or fixed-wireless home operator.

This object is specifically achieved by a method according to claim 1 comprising the following steps:
- defining a configuration parameter home operator class HOC for indicating whether the home operator of the UE is a mobile operator or a fixed-wireless operator,
- storing said configuration parameter HOC in the UE, and
- selecting at initial network selection one of mobile networks and fixed-wireless networks based on said configuration parameter HOC value.

The method according to the invention may further comprise:
- storing network selection information applicable for both mobile home operator and fixed-wireless home operator in the UE,
- defining fixed-wireless network selection information applicable for fixed-wireless home operator, and storing said fixed-wireless network selection information in the UE
- setting a preferred default network access mechanism in the UE according to the value of the configuration parameter HOC.
- setting a preferred default network in the UE according to the value of the configuration parameter HOC.

The default network access mechanism is set to mobile networks if the configuration parameter HOC is a mobile network configuration parameter or to fixed-wireless networks if the configuration parameter HOC is a fixed-wireless configuration parameter.

The preferred default network is set to the HPLMN if the configuration parameter HOC is a mobile network configuration parameter or to a list of H-WSID(s) if the configuration parameter HOC is a fixed-wireless configuration parameter.

Preferably, the network selection information comprises:
- a user preferred PLMNs list,
- an operator preferred PLMNs list,
- a user preferred WSIDs list for identifying a list of user preferred fixed-wireless access points,
- an operator preferred WSIDs list for identifying a list of preferred access points owned by fixed-operator roaming partners of the home operator

And the fixed-wireless network selection information comprises:
- a home operator access points list (H-WSIDs), identifying the list of access points owned by the fixed-wireless home operator,
- a preferred roaming access indicator, indicating whether the UE should prioritize the mobile network access or the fixed-wireless network access at alternative network selection, i.e. after a default network selection where no network can be selected,
- a preferred mobile network indicator indicating whether the fixed-wireless network operator has a preferred mobile network operator or not.

The Method according to the invention may further comprise the following steps:
- retrieving the configuration parameter HOC value and network selection information applicable for both mobile and fixed-wireless home operators including the user and operator preferred PLMNs lists and the user and operator preferred WSID(s) lists, and retrieving the fixed-wireless network selection information if the HOC value indicates a fixed-wireless home operator, and,
   at initial network selection,
- performing a PLMN selection if the network configuration parameter HOC is a mobile network configuration parameter
   or
- performing a fixed-wireless network selection, if the network configuration parameter HOC is a fixed-wireless configuration parameter.

With this procedure, the UE may select either the HPLMN if a PLMN selection is performed or the home operator Access Points H-WSID(s) if a fixed-wireless network selection is performed.

Preferably, the access points owned by the fixed-wireless home operator are stored in a separate list (H-WSID(s)) than the access points owned by other fixed-wireless networks, user/operator preferred WSIDs lists, enabling thereby the selection of home operator's Access Points may be initiated separately from the selection of fixed-wireless roaming partners's Access Points.

Furthermore, the configuration parameter HOC and the fixed-wireless network selection information (H-WSID(s), preferred roaming access mechanism, preferred mobile network indicator) is set by the home operator and can be factory configured or dynamically provisioned, whether in the USIM (Universal Subscriber Identification Module) of said UE as a preferred embodiment, or in a NVM (Non Volatile Memory).

Said configuration parameter HOC and fixed-wireless network selection information are updatable by the home operator after the UE power-on using over the air mechanism such as OMA DM, SMS, or USSD.

In a preferred embodiment of the invention, if no network can be selected using the initial network selection, the UE proceeds with an alternative network selection as follows:
- if said initial network selection is a PLMN selection, a fixed-wireless network selection is performed during which the UE only selects user or operator preferred access points WSID(s),
- if said initial network selection is a fixed-wireless network selection:
   a PLMN selection is performed if the default network access mechanism is set to fixed wireless networks and if the preferred roaming access mechanism is set to a mobile network access mechanism. If said PLMN selection fails, a fixed-wireless network selection is performed during which the UE only selects user or operator preferred access points WSID(s),
   a fixed-wireless network selection is performed if the default network access mechanism is set to "fixed wireless networks" and the preferred roaming access mechanism is "fixed-wireless networks". If said fixed-wireless network selection fails, a PLMN selection is preformed during which the UE only selects user or operator preferred access points WSID(s).

If an alternative network selection for fixed-wireless network home operator is chosen, said alternative network selection is consisting of:
a legacy PLMN selection with HPLMN as highest priority PLMN when the preferred mobile network indicator information indicates that the fixed-wireless home operator has a commercial agreement with said HPLMN as a preferred mobile network operator
   or
a PLMN selection procedure without the HPLMN when the preferred mobile network indicator information indicates that the fixed-wireless home operator has direct commercial agreements with a plurality of mobile networks.

The above object is also achieved by a dual mobile/fixed-wireless User Equipment (UE) according to claim 7, which comprises:
- means for analyzing a configuration parameter home operator class HOC for indicating whether the home operator of the UE is a mobile operator or a fixed-wireless operator,
- means for storing said configuration parameter HOC, and,
- means for selecting one of mobile networks, and fixed-wireless networks based on said configuration parameter HOC value at initial network selection.

The User Equipment according to the invention may further comprise:
- means for retrieving the configuration parameter HOC value,
- means for retrieving network selection information applicable for both mobile and fixed-wireless home operators including the user and operator preferred PLMNs lists and the user and operator preferred WSID(s) lists,
- means for retrieving said fixed-wireless network selection information,
- means for performing:
   - a PLMN selection if the network configuration parameter HOC is a mobile network configuration parameter
      or
   - a fixed-wireless network selection, if the network configuration parameter HOC is a fixed-wireless configuration parameter.

Preferably, said means for retrieving network selection information comprises :
- a user preferred PLMNs list,
- an operator preferred PLMNs list,
- a user preferred WSIDs list,
- an operator preferred WSIDs list.

Preferably, said means for retrieving fixed-wireless network selection information comprises :
- a home operator access points list (H-WSIDs),
- a preferred roaming access mechanism,
- a preferred mobile network indicator.

Preferably, the network selection is controlled by the HPLMN.

The object is also achieved by a system according to claim 11.

Advantageously, the invention enables a handset manufacturer to sell the same handset to both mobile operators and fixed-wireless operators. In addition the invention enables a user to keep the same handset while changing its subscription between mobile and fixed-wireless home operators.

### BRIEF DESCRIPTION OF THE FIGURES

The forgoing summary, as well as the following detailed description, will be better understood when read in conjunction with the appended figures illustrating a exemplary embodiment of the invention in which:
- figure 1, discussed above, schematically illustrates the User Equipment classification,
- figure 2A, discussed above, schematically illustrate the expected proposed behavior of dual mobile/fixed-wireless User Equipments for mobile home operator's subscriber during Network selection,

- figure 2B, discussed above, schematically illustrate the expected proposed behavior of dual mobile/fixed-wireless User Equipments for fixed-wireless home operator's subscriber during Network selection,
- figure 3, schematically represents the configuration steps of a generic UE for performing a network selection method of the invention,
- figure 4, schematically illustrates an example of initial network selection by a UE configured according to the invention,
- figures 5A and 5B, schematically illustrate particular embodiments of network selection by a UE configured according to the invention.

### DESCRIPTION OF A DETAILED EMBODIMENT OF THE INVENTION

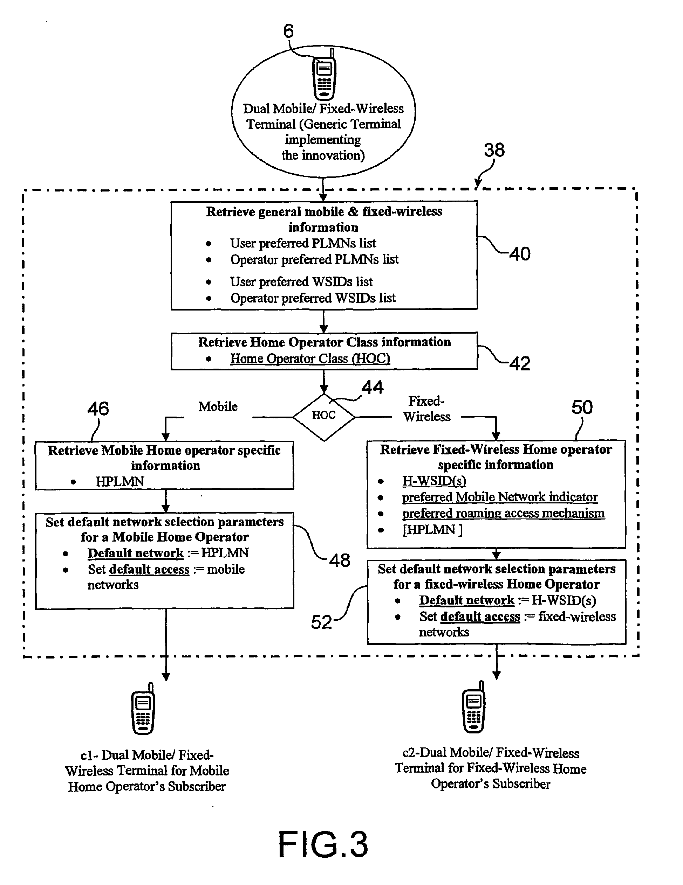

The invention will be described by reference to figures 3 to 4, 5A and 5B, illustrating an implementation of the invention in a system comprising at least a mobile network, at least a fixed-wireless network, a dual user equipment (UE) having mobile network access capability and fixed-wireless network access capability, and means for controlling the network selection when said (UE) is conducting an initial network selection out of the radio coverage of its HPLMN.

The system comprises means for defining a configuration parameter HOC for indicating whether the home operator of the UE is a mobile operator or a fixed-wireless operator, means for setting said configuration parameter HOC in the UE to allow said UE to select a network based on said configuration parameter HOC value at initial network selection.

Said means consist of software applications implemented in the HPLMN and in the UE and controlled by said Home operator to configure the UE for implementing the method according to the invention.

The software applications comprise instructions for, when executed in the UE, storing in said UE network selection information applicable for both mobile home operator and fixed-wireless home operator, and instructions for, when executed in the UE, setting a preferred default network access mechanism in the UE according to the value of the configuration parameter HOC.

The software applications allow said UE to retrieve the configuration parameter HOC value, the network selection information applicable for both mobile and fixed-wireless home operators including the user and operator preferred PLMNs lists and the user and operator preferred WSID(s) lists, and the fixed-wireless network selection information for the fixed-wireless HOC case, for allowing the UE to perform:
a PLMN selection if the network configuration parameter HOC is a mobile network configuration parameter
   or
a fixed-wireless network selection, if the network configuration parameter HOC is a fixed-wireless configuration parameter.

Figure 3 illustrates a configuration phase 38 of a UE 6, such as a mobile phone or a laptop, having both mobile and fixed-wireless network access capabilities.

This phase aims at enabling the UE 6 to perform either a 3GPP network selection or a non-3GPP network selection based on the configuration information stored by the Home operator in the USIM or in a NVM of the UE.

The configuration information comprise the home operator class information (HOC), the network selection information (User preferred PLMNs List, Operator preferred PLMNs List, User preferred WSIDs List, Operator preferred WSIDs List) and the fixed-wireless network selection information (H-WSID(s), preferred roaming access mechanism, preferred mobile network indicator).

The UE 6 is provided with a software application that will be parameterized with the configuration information downloaded from the USIM or from the NVM in order to automatically carry out the network selection according to the downloaded data.

The UE 6 can be factory configured or dynamically provisioned with said information.

At step 40, at initial network selection (when the UE 6 is turned on or after a handover procedure), the UE 6 automatically retrieves the information stored by the home operator in its memory or in the NVM.

At step 42, the UE 6 retrieves the HOC parameter (Home Operator Class).

At step 44, the UE 6 analyses said HOC.

If the HOC value corresponds to a Mobile Network, at step 46, the UE 6 parameterizes the software application with said HOC value.

At step 48, the software application set default network selection parameters for a Mobile Home Operator as follows:
- Default network : = HPLMN
- Set default access : = mobile networks.

If the HOC value corresponds to a fixed-wireless Network, at step 50, the UE 6 parameterizes the software application with said HOC value. The software application then retrieves the stored fixed-wireless Network Home Operator specific information:
- H-WSID(s)
- preferred Mobile Network indicator
- preferred roaming access mechanism
- [HPLMN]

At step 52, the software application set default network selection parameters for a fixed-wireless Network Home Operator as follows:
- Default network : = H-WSID(s)
- Set default access : = fixed-wireless networks.

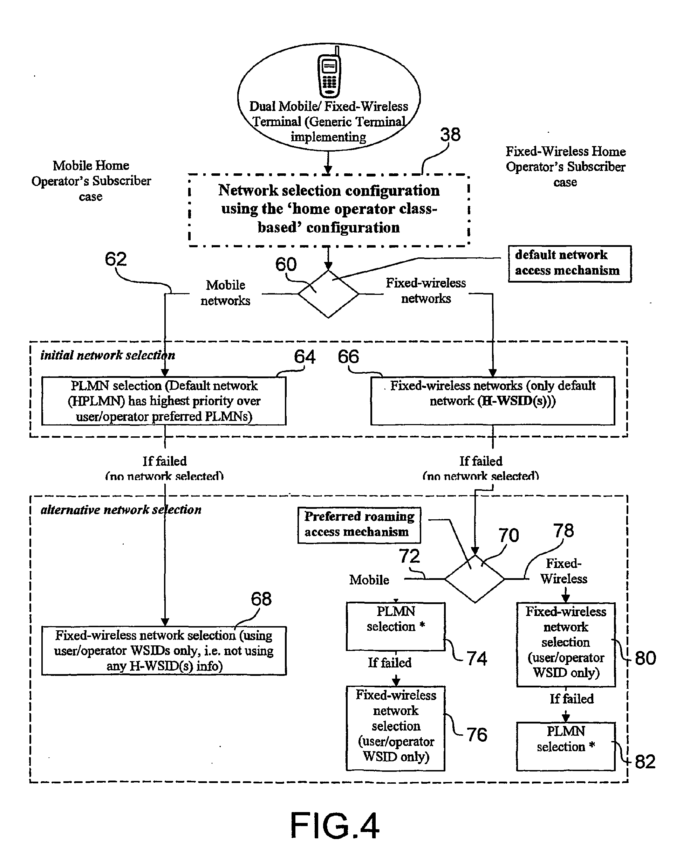

Figure 4 illustrates an example of initial network selection phase performed by the UE after the configuration phase 38 when the UE 6 is turned on out of the HPLMN coverage area.

At step 60, the software application analyses the HOC value.

If the HOC corresponds to a Mobile Network (arrow 62), the software application executes a PLMN selection 64 in which Default network (HPLMN) is given a highest priority over user/operator preferred PLMNs.

If the HOC value corresponds to a fixed-wireless Network, the software application executes a fixed-wireless selection 66 in which default network H-WSID(s) is selected.

If the PLMN selection 64 fails, the software application executes a alternative fixed-wireless network selection 68 using only the user/operator WSIDs as selection parameter.

If the fixed-wireless selection 66 fails, at step 70, the software application checks the preferred roaming access mechanism parameter configured in the UE.

If the roaming access mechanism corresponds to mobile network (arrow 72), the software application executes a PLMN selection (step 74), and if this PLMN selection fails, the software application executes a fixed-wireless selection (step 76) using only the user/operator WSIDs as selection parameter.

If the roaming access mechanism corresponds to fixed-wireless network (arrow 78), the software application executes a fixed-wireless selection (step 80), and if this fixed-wireless selection fails, the software application executes a PLMN selection (step 82).

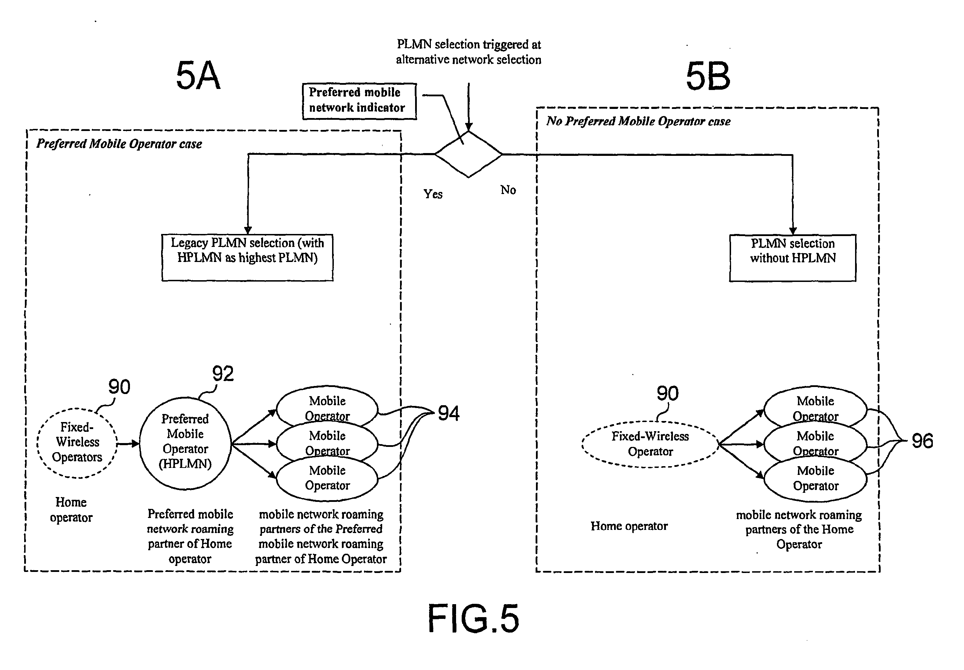

Figures 5A and 5B schematically illustrates particular embodiments of the PLMN selection (step 74 and 82) when initiated by a UE configured according to the invention as part of the alternative network selection when a fixed-wireless home operator access point cannot be selected at initial network selection.

In figure 5A wherein the preferred mobile network indicator information indicates that the fixed-wireless home operator has a preferred mobile network roaming partner, when the UE 6 is out of coverage of a Fixed-Wireless Home operator 90, and if mobile network access mechanism is used for the alternative network selection, the software application initiates the PLMN selection as currently defined in 3GPP specifications, assuming that the Preferred Mobile Operator 92 is set in the USIM as the HPLMN.

The UE 6 will select the HPLMN as highest priority, and if HPLMN is not available the UE will select a mobile network among a list of preferred mobile network roaming partners 94 of the mobile network Home Operator HPLMN 92.

In figure 5B, wherein the preferred mobile network indicator information indicates that the fixed-wireless home operator has no preferred mobile network roaming partner, when the UE 6 is out of coverage of a Fixed-Wireless Home operator 90, and if mobile network access mechanism is used for the alternative network selection, the software application initiates the PLMN selection without HPLMN.

The UE 6 will select a mobile network among a list of preferred mobile network roaming partners 96 of the Fixed-Wireless Home operator 90.

Following is a preferred implementation of the invention in a mobile terminal. The HOC is stored in Elementary Files (EF) as described hereafter:

### EF-HOCLASS:

This EF contains the class identifier for the home operator.

| Identifier: 'xxxx' | | Structure: Transparent | | Optional | |
|---|---|---|---|---|---|
| SFI:'xx' | | | | | |
| File size :1 byte | | | Update activity : low | | |
| *Access Conditions:* | | | | | |
| | READ | PIN | | | |
| | UPDATE | ADM | | | |
| | DEACTIVATE | ADM | | | |
| | ACTIVATE | ADM | | | |

| Bytes | | Description | | M/O | Length |
|---|---|---|---|---|---|
| 1 | | Home Operator Class | | M | 1byte |
| | | (00: Mobile network | | | |
| | | 01:Fixed-Wireless network) | | | |

### EF-H-WSID:

This EF contains the network identifiers of the fixed-wireless home operator.

| Identifier: 'xxxx' | | Structure: Transparent | | Optional | |
|---|---|---|---|---|---|
| SFI:'xx' | | | | | |
| File size :N byte | | | Update activity : low | | |
| Access Conditions: | | | | | |
| | READ | PIN | | | |
| | UPDATE | ADM | | | |
| | DEACTIVATE | ADM | | | |
| | ACTIVATE | ADM | | | |

| Bytes | | Description | | M/O | Length |
|---|---|---|---|---|---|
| 1 | | H-WSID-1 | | M | 1byte |
| 2 | | H-WSID-2 | | M | 1byte |
| ... | | ... | | M | 1byte |
| N | | H-WSID-N | | M | 1byte |

### EF-PPLMNindicator:

This EF contains the preferred mobile network operator indicator. It is relevant when the EFHOCLASS indicates a fixed-wireless home operator.

| Identifier: 'xxxx' | | Structure: Transparent | | | | Optional |
|---|---|---|---|---|---|---|
| SFI:'xx' | | | | | | |
| File size :1 byte | | | | Update activity : low | | |
| Access Conditions: | | | | | | |
| | READ | | PIN | | | |
| | UPDATE | | ADM | | | |
| | DEACTIVATE | | ADM | | | |
| | ACTIVATE | | ADM | | | |

| Bytes | Description | | | | M/O | Length |
|---|---|---|---|---|---|---|
| 1 | Preferred mobile network operator indicator | | | | M | 1byte |
| | (00: No | | | | | |
| | 01:Yes) | | | | | |

If the PPLMNindicator is set to:
- yes, the HPLMN information in the USIM does not contain a mobile network home operator, but rather contains the preferred mobile network of the fixed-wireless home operator.
- no, the HPLMN information in the USIM is not relevant (not present) and the UE initiates a PLMN selection without HPLMN when using the mobile networks access mechanism..

### EF-PRoamingAccess:

This EF contains the preferred roaming access mechanism. It is relevant when the EFHOCLASS indicates a fixed-wireless home operator.

| Identifier:'xxxx' | Structure: Transparent | | | Optional | |
|---|---|---|---|---|---|
| SFI:'xx' | | | | | |
| File size :1 byte | | | Update activity : low | | |
| Access Conditions: | | | | | |
| | READ | PIN | | | |
| | UPDATE | ADM | | | |
| | DEACTIVATE | ADM | | | |
| | ACTIVATE | ADM | | | |

| Bytes | Description | | | M/O | Length |
|---|---|---|---|---|---|
| 1 | Preferred roaming access mechanism | | | M | 1byte |
| | (00: mobile networks | | | | |
| | 01:fixed-wireless networks) | | | | |

If the PRoamingAccess is set to:
- mobile networks, the UE will consider mobile networks as higher priority than fixed-wireless networks during the alternative network selection, i.e. when out of fixed-wireless home operator coverage.

Fixed-wireless networks, the UE will consider fixed-wireless networks as higher priority than mobile networks during the alternative network selection, i.e. when out of fixed-wireless home operator coverage.

## Claims

1. Method for controlling the network selection by the home operator of a dual mobile/fixed-wireless user equipment UE (6) having mobile network access capability and fixed-wireless network access capability, said method **characterized by** the following steps:
- defining a configuration parameter home operator class HOC for indicating whether the home operator of the UE (6) is a mobile operator or a fixed-wireless operator,
- storing said configuration parameter HOC in the UE (6), and,
- selecting at initial network selection one of mobile networks and fixed-wireless networks based on said configuration parameter HOC value.

2. Method according to claim 1 comprising:
- storing network selection information applicable for both mobile home operator and fixed-wireless home operator in the UE (6),
- defining fixed-wireless network selection information applicable for fixed-wireless home operator, and storing said fixed-wireless network selection information in the UE (6),
- setting a preferred default network access mechanism in the UE (6) according to the value of the configuration parameter HOC,
- setting a preferred default network in the UE (6) according to the value of the configuration parameter HOC.

3. Method according to claim 2 wherein the default network access mechanism is set to mobile networks if the configuration parameter HOC is a mobile network configuration parameter.

4. Method according to claim 1 further comprising the following steps:
- retrieving the configuration parameter HOC value and network selection information applicable for both mobile and fixed-wireless home operators including the user and operator preferred PLMNs lists and the user and operator preferred WSID(s) lists, and retrieving the fixed-wireless network selection information if the HOC value indicates a fixed-wireless home operator, and, at initial network selection,
- performing a PLMN selection if the network configuration parameter HOC is a mobile network configuration parameter
or
- performing a fixed-wireless network selection, if the network configuration parameter HOC is a fixed-wireless configuration parameter.

5. Method according to Claim 1 wherein, if an alternative network selection for fixed-wireless network home operator is chosen, said alternative network selection is:
- a legacy PLMN selection with HPLMN as highest priority PLMN when the preferred mobile network indicator information indicates that the fixed-wireless home operator has a commercial agreement with said HPLMN as a preferred mobile network operator
or
- a PLMN selection procedure without the HPLMN when the preferred mobile network indicator information indicates that the fixed-wireless home operator has direct commercial agreements with a plurality of mobile networks.

6. Method According to claim 1 wherein, the access points owned by the fixed-wireless home operator are stored in a separate list H-WSID(s) than the access points owned by other fixed-wireless networks enabling thereby the selection of home operator's Access Points may be initiated separately from the selection of fixed-wireless roaming partners's Access Points.

7. A dual mobile/fixed-wireless user Equipment UE (6) having mobile network access capability and fixed-wireless network access capability **characterized by**:
- means for analyzing a configuration parameter home operator class HOC indicating whether the home operator of the UE (6) is a mobile operator or a fixed-wireless operator,
- means for storing said configuration parameter HOC, and
- means for selecting one of mobile networks and fixed-wireless networks based on said configuration parameter HOC value at initial network selection.

8. User Equipment (6) according to claim 7 further comprising:
- means for retrieving the configuration parameter HOC value,
- means for retrieving network selection information applicable for both mobile and fixed-wireless home operators including the user and operator preferred PLMNs lists and the user and operator preferred WSID(s) lists,
- means for retrieving fixed-wireless network selection information applicable for fixed-wireless home operator
- means for performing:
- a PLMN selection if the network configuration parameter HOC is a mobile network configuration parameter
or
- a fixed-wireless network selection, if the network configuration parameter HOC is a fixed-wireless configuration parameter.

9. User Equipement (6) according to claim 8 wherein said means for retrieving network selection information comprises:
- a user preferred PLMNs list,
- an operator preferred PLMNs list,
- a user preferred WSIDs list,
- an operator preferred WSIDs list.

10. User Equipment (6) according to claim 8 wherein said means for retrieving fixed-wireless network selection information comprises:
- a home operator access points list (H-WSIDs),
- a preferred roaming access mechanism,
- a preferred mobile network indicator.

11. System for controlling the network selection by a dual/mobile fixed-wireless user equipment UE (6) having mobile network access capability and fixed-wireless network access capability, said system comprising the home operator of the UE (6) being either a mobile network HPLMN operator or a fixed-wireless network HWSID operator, at least a mobile network roaming partner PLMN operator, and at least a fixed-wireless network roaming partner WSID operator, the system **characterized by**:
- means for defining a configuration parameter home operator class HOC for indicating whether the home operator of the UE (6) is a mobile operator or a fixed-wireless operator,
- means for setting said configuration parameter HOC in the UE (6) to allow said UE to select one of mobile networks and fixed-wireless networks based on said configuration parameter HOC value at initial network selection.

12. System according to claim 11 wherein said configuration means consist of software applications controlled by the Home operator and adapted for configuring the UE (6) for implementing the method according to claim 1.

13. System according to claim 12 wherein said software applications comprise instructions executable in the UE (6) for storing in said UE (6) network selection information applicable for both mobile home operator and fixed-wireless home operator, fixed-wireless network selection information applicable for fixed-wireless homed operator and instructions for setting a preferred default network access mechanism and preferred default network in the UE (6) according to the value of the configuration parameter HOC.

14. System according to claim 13 wherein said software applications allow said UE (6) to retrieve the configuration parameter HOC value and the selection information applicable for both mobile and fixed-wireless home operators including the user and operator preferred PLMNs lists and the user and operator preferred WSID(s) lists, and the fixed-wireless network selection information for allowing the UE (6) to perform:
- a PLMN selection if the network configuration parameter HOC is a mobile network configuration parameter,
or
- a fixed-wireless network selection, if the network configuration parameter, HOC is a fixed-wireless home parameter.

15. System according to claim 13 wherein the network selection is controlled by the Home operator,

## Patentansprüche

1. Verfahren zur Steuerung der Netzwerkauswahl durch den Betreiber des Heimnetzwerks eines mobilen/festen drahtlosen Dual-Mode-Benutzergeräts UE (6), welches sowohl Mobilnetzwerk- als auch feste Drahtlosnetzzugangsfähigkeiten hat, wobei das Verfahren durch die folgenden Schritte gekennzeichnet ist:
- Definieren eines Konfigurationsparameters Heimnetzwerkbetreiberklasse HOC zum Anzeigen, ob der Heimnetzwerkbetreiber des UE (6) ein Mobilbetreiber oder fester Drahtlosbetreiber ist,
- Speichern des Konfigurationsparameters HOC in dem UE (6), und
- Auswählen eines aus Mobilnetzwerken und festen Drahtlosnetzwerken bei der anfänglichen Netzwerkauswahl basierend auf dem Wert des Konfigurationsparameters HOC.

2. Verfahren nach Anspruch 1, das aufweist:
- Speichern von Netzwerkauswahlinformationen, die sowohl auf den Mobil-heimnetzwerkbetreiber als auch den festen Drahtlosheimnetzwerkbetreiber anwendbar sind, in dem UE (6),
- Definieren von festen Drahtlosnetzwerkauswahlinformationen, die auf den festen Drahtlosheimnetzwerkbetreiber anwendbar sind, und Speichern der festen Drahtlosnetzwerkauswahlinformationen in dem UE (6),
- Festlegen eines bevorzugten Vorgabenetzwerkzugangsmechanismus in dem UE (6) gemäß dem Wert des Konfigurationsparameters HOC,
- Festlegen eines bevorzugten Vorgabenetzwerks in dem UE (6) gemäß dem Konfigurationsparameter HOC.

3. Verfahren nach Anspruch 2, wobei der Vorgabenetzwerkzugangsmechanismus auf Mobilnetzwerke festgelegt wird, wenn der Konfigurationsparameter HOC ein Mobilnetzwerkkonfigurationsparameter ist.

4. Verfahren nach Anspruch 1, das ferner aufweist:
- Abrufen des Werts des Konfigurationsparameters HOC und der Netzwerkauswahlinformationen, die sowohl für Mobil- als auch feste Drahtlosheimnetzwerkbetreiber anwendbar sind, einschließlich der von Benutzern und Betreibern bevorzugten PLMN-Listen und der von Benutzern und Betreibern bevorzugten WSID-Listen, und Abrufen der festen Drahtlosnetzwerkauswahlinformationen, wenn der HOC-Wert einen festen Drahtlosheimnetzwerkbetreiber angibt, und bei der anfänglichen Netzwerkauswahl:
- Durchführen einer PLMN-Auswahl, wenn der Netzwerkkonfigurationsparameter HOC ein Mobilnetzwerkkonfigurationsparameter ist,
oder
- Durchführen einer festen Drahtlosnetzwerkauswahl, wenn der Netzwerkkonfigurationsparameter HOC ein fester Drahtloskonfigurationsparameter ist.

5. Verfahren nach Anspruch 1, wobei, wenn eine alternative Netzwerkauswahl für den festen Drahtlosheimnetzwerkbetreiber gewählt wird, diese alternative Netzwerkauswahl ist:
- eine Alt-PLMN-Auswahl mit dem HPLMN als dem PLMN mit höchster Priorität, wenn die Vorzugsmobilnetzwerkanzeigeinformation anzeigt, dass der feste Drahtlosheimnetzwerkbetreiber eine geschäftliche Vereinbarung mit dem HPLMN als einem bevorzugten Mobilnetzwerkbetreiber hat,
oder
- ein PLMN-Auswahlverfahren ohne das HPLMN, wenn die Vorzugsmobilnetzwerkanzeigeinformation anzeigt, dass der feste Drahtlosheimnetzwerkbetreiber direkte geschäftliche Vereinbarungen mit mehreren Mobilnetzwerken hat.

6. Verfahren nach Anspruch 1, wobei die Zugangspunkte, die der feste Drahtlosheimnetzwerkbetreiber besitzt, in einer von den Zugangspunkten, die andere feste Drahtlosnetzwerke besitzen, getrennten Liste H-WSID gespeichert sind, wodurch die Auswahl von Zugangspunkten des Heimnetzwerkbetreibers getrennt von der Auswahl von Zugangspunkten fester Drahtlos-Roamingpartner eingeleitet werden kann.

7. Mobiles/festes drahtloses Dual-Mode-Benutzergerät UE (6) mit mobiler Netzwerkzugangsfähigkeit und fester Drahtlosnetzzugangsfähigkeit, **gekennzeichnet durch**:
- eine Einrichtung zum Analysieren eines Konfigurationsparameters Heimnetzwerkbetreiberklasse HOC zum Anzeigen, ob der Heimnetzwerkbetreiber des UE (6) ein Mobilbetreiber oder fester Drahtlosbetreiber ist,
- eine Einrichtung zum Speichern des Konfigurationsparameters HOC, und
- eine Einrichtung zum Auswählen eines aus Mobilnetzwerken und festen Drahtlosnetzwerken basierend auf dem Wert des Konfigurationsparameters HOC bei der anfänglichen Netzwerkauswahl.

8. Benutzergerät (6) nach Anspruch 7, das ferner aufweist:
- eine Einrichtung zum Abrufen des Werts des Konfigurationsparameters HOC,
- eine Einrichtung zum Abrufen von Netzwerkauswahlinformationen, die sowohl für Mobil- als auch feste Drahtlosheimnetzwerkbetreiber anwendbar sind, einschließlich der von Benutzern und Betreibern bevorzugten PLMN-Listen und der von Benutzern und Betreibern bevorzugten WSID-Listen,
- eine Einrichtung zum Abrufen der festen Drahtlosnetzwerkauswahlinformationen, die auf den festen Drahtlosheimnetzwerkbetreiber anwendbar ist,
- eine Einrichtung zum Durchführen:
- einer PLMN-Auswahl, wenn der Netzwerkkonfigurationsparameter HOC ein Mobilnetzwerkkonfigurationsparameter ist,
oder
- einer festen Drahtlosnetzwerkauswahl, wenn der Netzwerkkonfigurationsparameter HOC ein fester Drahtloskonfigurationsparameter ist.

9. Benutzergerät (6) nach Anspruch 8, wobei die Einrichtung zum Abrufen von Netzwerkauswahlinformationen aufweist:
- eine Liste mit vom Benutzer bevorzugten PLMNs,
- eine Liste mit vom Betreiber bevorzugten PLMNs,
- eine Liste mit vom Benutzer bevorzugten WSIDs,
- eine Liste mit vom Betreiber bevorzugten WSIDs.

10. Benutzergerät (6) nach Anspruch 8, wobei die Einrichtung zum Abrufen von festen Drahtlosnetzwerkauswahlinformationen aufweist:
- eine Liste mit Zugangspunkten des Heimnetzwerkbetreibers (H-WSIDs),
- einen bevorzugten Roaming-Zugangsmechanismus,
- eine Anzeige für ein bevorzugtes Mobilnetzwerk.

11. System zur Steuerung der Netzwerkauswahl durch ein mobiles/festes drahtloses Dual-Mode-Benutzergerät UE (6), das sowohl Mobilnetzwerkzugangsfähigkeit als auch feste Drahtlos-Netzzugangsfähigkeit hat, wobei das System aufweist, dass der Heimnetzwerkbetreiber des UE (6) entweder ein Betreiber eines Mobilnetzwerks HPLMN oder ein Betreiber eines festen Drahtlosnetzwerks HWSID, ein Betreiber wenigstens eines Mobilnetzwerk-Roamingpartners und ein Betreiber wenigstens eines festen Drahtlosnetzwerk-Roamingpartners WSID ist, wobei das System **gekennzeichnet ist durch**:
- eine Einrichtung zum Definieren eines Konfigurationsparameters Heimnetzwerkbetreiberklasse HOC zum Anzeigen, ob der Heimnetzwerkbetreiber des UE (6) ein Mobilbetreiber oder fester Drahtlosbetreiber ist,
- eine Einrichtung zum Festlegen des Konfigurationsparameters HOC in dem UE (6), um zu ermöglichen, dass das UE (6) bei der anfänglichen Netzwerkauswahl eines aus Mobilnetzwerken und festen Drahtlosnetzwerken basierend auf dem Wert des Konfigurationsparameters HOC auswählt.

12. System nach Anspruch 11, wobei die Konfigurationseinrichtung aus Softwareanwendungen besteht, die von dem Heimnetzwerkbetreiber gesteuert werden und geeignet sind, das UE (6) zu konfigurieren, um das Verfahren nach Anspruch 1 zu implementieren.

13. System nach Anspruch 12, wobei die Softwareanwendungen aufweisen: Anweisungen, die in dem UE (6) ausführbar sind, zum Speichern von Netzwerkauswahlinformationen in dem UE (6), die sowohl auf den Mobilheimnetzwerkbetreiber als auch den festen Drahtlosheimnetzwerkbetreiber anwendbar sind, von festen Drahtlosnetzwerkauswahlinformationen, die auf den festen Drahtlosheimnetzwerkbetreiber anwendbar sind, und Anweisungen zum Festlegen eines bevorzugten Vorgabenetzwerkzugangsmechanismus und eines bevorzugten Vorgabenetzwerks in dem UE (6) gemäß dem Wert des Konfigurationsparameters HOC.

14. System nach Anspruch 13, wobei die Softwareanwendungen ermöglichen, dass das UE (6) den Wert des Konfigurationsparameters HOC und die Auswahlinformationen, die sowohl auf Mobil- als auch feste Drahtlosheimnetzwerkbetreiber anwendbar sind, einschließlich der von Benutzern und Betreibern bevorzugten PLMN-Listen und der von Benutzern und Betreibern bevorzugten WSID-Listen, abruft, und wobei die festen Drahtlosnetzwerkauswahlinformationen dazu dienen, dem UE (6) zu ermöglichen, durchzuführen:
- eine PLMN-Auswahl, wenn der Netzwerkkonfigurationsparameter HOC ein Mobilnetzwerkkonfigurationsparameter ist,
oder
- eine feste Drahtlosnetzwerkauswahl, wenn der Netzwerkkonfigurationsparameter HOC ein fester Drahtlosheimnetzwerkparameter ist.

15. System nach Anspruch 13, wobei die Netzwerkauswahl von dem Heimnetzwerkbetreiber gesteuert wird.

## Revendications

1. Procédé de commande de la sélection d'un réseau par l'opérateur de rattachement d'un équipement utilisateur, UE, à double mode mobile / fixe sans fil (6), ayant des capacités d'accès au réseau mobile et des capacités d'accès au réseau fixe sans fil, ledit procédé étant **caractérisé par** les étapes ci-dessous consistant à :
- définir une classe d'opérateurs de rattachement, HOC, de paramètres de configuration en vue d'indiquer si l'opérateur de rattachement de l'équipement UE (6) est un opérateur mobile ou un opérateur fixe sans fil ;
- stocker ladite classe HOC de paramètres de configuration dans l'équipement UE (6) ; et
- sélectionner, lors de la sélection initiale du réseau, l'un des réseaux mobiles et réseaux fixes sans fil sur la base de ladite valeur de classe HOC de paramètres de configuration.

2. Procédé selon la revendication 1, consistant à :
- stocker des informations de sélection de réseau applicables pour l'opérateur de rattachement mobile et pour l'opérateur de rattachement fixe sans fil dans l'équipement UE (6) ;
- définir des informations de sélection de réseau fixe sans fil applicables pour l'opérateur de rattachement fixe sans fil, et stocker lesdites informations de sélection de réseau fixe sans fil dans l'équipement UE (6) ;
- définir un mécanisme préféré d'accès au réseau par défaut dans l'équipement UE (6) selon la valeur de la classe HOC de paramètres de configuration ;
- définir un réseau par défaut préféré dans l'équipement UE (6) selon la valeur de la classe HOC de paramètres de configuration.

3. Procédé selon la revendication 2, dans lequel le mécanisme d'accès au réseau par défaut est défini sur les réseaux mobiles si la classe HOC de paramètres de configuration correspond à un paramètre de configuration de réseau mobile.

4. Procédé selon la revendication 1, comprenant en outre les étapes ci-dessous consistant à :
- récupérer la valeur de classe HOC de paramètres de configuration et les informations de sélection de réseau applicables pour les opérateurs de rattachement mobiles et fixes sans fil incluant les listes de réseaux PLMN préférés de l'opérateur et de l'utilisateur et les listes d'identifiants WSID préférés de l'opérateur et de l'utilisateur, et récupérer les informations de sélection de réseau fixe sans fil si la valeur de classe HOC indique un opérateur de rattachement fixe sans fil, et, lors de la sélection initiale du réseau ;
- mettre en oeuvre une sélection de réseau PLMN si la classe HOC de paramètres de configuration de réseau correspond à un paramètre de configuration de réseau mobile ; ou
- mettre en oeuvre une sélection de réseau fixe sans fil, si la classe HOC de paramètres de configuration de réseau correspond à un paramètre de configuration fixe sans fil.

5. Procédé selon la revendication 1, dans lequel, si une sélection de réseau alternative pour un opérateur de rattachement de réseau fixe sans fil est sélectionnée, ladite sélection de réseau alternative est :
- une sélection de réseau PLMN existant avec un réseau HPLMN en tant que réseau PLMN de priorité la plus élevée, lorsque les informations d'indicateur de réseau mobile préféré indiquent que l'opérateur de rattachement fixe sans fil dispose d'un accord commercial pour ledit réseau HPLMN, en qualité d'opérateur de réseau mobile préféré ; ou
- une procédure de sélection de réseau PLMN sans le réseau HPLMN, lorsque les informations d'indicateur de réseau mobile préféré indiquent que l'opérateur de rattachement fixe sans fil dispose d'accords commerciaux directs pour une pluralité de réseaux mobiles.

6. Procédé selon la revendication 1, dans lequel les points d'accès appartenant à l'opérateur de rattachement fixe sans fil sont stockés dans une liste séparée d'identifiants H-WSID, à l'inverse des points d'accès appartenant à d'autres réseaux fixes sans fil, ce qui permet par conséquent d'initier la sélection des points d'accès de l'opérateur de rattachement séparément de la sélection des points d'accès des partenaires itinérants fixes sans fil.

7. Équipement utilisateur, UE, à double mode mobile / fixe sans fil (6) ayant des capacités d'accès au réseau mobile et des capacités d'accès au réseau fixe sans fil, **caractérisé par** :
- un moyen pour analyser une classe d'opérateurs de rattachement, HOC, de paramètres de configuration indiquant si l'opérateur de rattachement de l'équipement UE (6) est un opérateur mobile ou un opérateur fixe sans fil ;
- un moyen pour stocker ladite classe HOC de paramètres de configuration ; et
- un moyen pour sélectionner, lors de la sélection initiale du réseau, l'un des réseaux mobiles et réseaux fixes sans fil sur la base de ladite valeur de classe HOC de paramètres de configuration.

8. Équipement utilisateur (6) selon la revendication 7, comprenant en outre :
- un moyen pour récupérer la valeur de classe HOC de paramètres de configuration ;
- un moyen pour récupérer des informations de sélection de réseau applicables pour les opérateurs de rattachement mobiles et fixes sans fil incluant les listes de réseaux PLMN préférés de l'opérateur et de l'utilisateur et les listes d'identifiants WSID préférés de l'opérateur et de l'utilisateur ;
- un moyen pour récupérer des informations de sélection de réseau fixe sans fil applicables pour un opérateur de rattachement fixe sans fil ;
- un moyen pour mettre en oeuvre :
- une sélection de réseau PLMN si la classe HOC de paramètres de configuration de réseau correspond à un paramètre de configuration de réseau mobile ; ou
- une sélection de réseau fixe sans fil, si la classe HOC de paramètres de configuration de réseau correspond à un paramètre de configuration fixe sans fil.

9. Équipement utilisateur (6) selon la revendication 8, dans lequel ledit moyen pour récupérer les informations de sélection de réseau comporte :
- une liste de réseaux PLMN préférés de l'utilisateur ;
- une liste de réseaux PLMN préférés de l'opérateur ;
- une liste d'identifiants WSID préférés de l'utilisateur ; et
- une liste d'identifiants WSID préférés de l'opérateur.

10. Équipement utilisateur (6) selon la revendication 8, dans lequel ledit moyen pour récupérer les informations de sélection de réseau fixe sans fil comporte :
- une liste de points d'accès d'opérateur de rattachement (H-WSID) ;
- un mécanisme d'accès en itinérance préféré ;
- un indicateur de réseau mobile préféré.

11. Système destiné à commander la sélection d'un réseau par un équipement utilisateur, UE, à double mode mobile / fixe sans fil (6) ayant des capacités d'accès au réseau mobile et des capacités d'accès au réseau fixe sans fil, ledit système comportant l'opérateur de rattachement de l'équipement UE (6), lequel est un opérateur HPLMN de réseau mobile ou un opérateur HWSID de réseau fixe sans fil, au moins un opérateur PLMN de partenaire d'itinérance de réseau mobile, et au moins un opérateur WSID de partenaire d'itinérance de réseau fixe sans fil, le système étant **caractérisé par** :
- un moyen pour définir une classe d'opérateurs de rattachement HOC de paramètres de configuration permettant d'indiquer si l'opérateur de rattachement de l'équipement UE (6) est un opérateur mobile ou un opérateur fixe sans fil ;
- un moyen pour définir ladite classe HOC de paramètres de configuration dans l'équipement UE (6) en vue de permettre audit équipement UE de sélectionner l'un parmi des réseaux mobiles et des réseaux fixes sans fil, sur la base de ladite valeur de classe HOC de paramètres de configuration, lors de la sélection initiale du réseau.

12. Système selon la revendication 11, dans lequel ledit moyen de configuration est constitué d'applications logicielles commandées par l'opérateur de rattachement, et est apte à configurer l'équipement UE (6) en vue de la mise en oeuvre du procédé selon la revendication 1.

13. Système selon la revendication 12, dans lequel lesdites applications logicielles comprennent des instructions exécutables dans l'équipement UE (6) en vue de stocker, dans ledit équipement UE (6), des informations de sélection de réseau applicables pour l'opérateur de rattachement mobile et pour l'opérateur de rattachement fixe sans fil, des informations de sélection de réseau fixe sans fil applicables pour l'opérateur de rattachement fixe sans fil, et des instructions pour définir un mécanisme d'accès au réseau par défaut préféré et un réseau par défaut préféré dans l'équipement UE (6), selon la valeur de la classe HOC de paramètres de configuration.

14. Système selon la revendication 13, dans lequel lesdites applications logicielles permettent audit équipement UE (6) de récupérer la valeur de classe HOC de paramètres de configuration et les informations de sélection applicables aux opérateurs de rattachement mobiles et fixes sans fil incluant les listes de réseaux PLMN préférés de l'opérateur et de l'utilisateur et les listes d'identifiants WSID préférés de l'opérateur et de l'utilisateur, et les informations de sélection de réseau fixe sans fil, en vue de permettre à l'équipement UE (6) de mettre en oeuvre :
- une sélection de réseau PLMN si la classe HOC de paramètres de configuration de réseau correspond à un paramètre de configuration de réseau mobile ; ou
- une sélection de réseau fixe sans fil, si la classe HOC de paramètres de configuration du réseau correspond à un paramètre de rattachement fixe sans fil.

15. Système selon la revendication 13, dans lequel la sélection du réseau est commandée par l'opérateur de rattachement.
